# EUROPEAN PATENT SPECIFICATION

(11) **EP 4 421 963 B1**
(45) Date of publication and mention of the grant of the patent: **24.12.2025**
(21) Application number: 23872896.8
(22) Date of filing: 15.09.2023
(51) Int. Cl.: H01M 50/284, H01M 10/42, H01M 50/503, H01M 50/207

(54) **BATTERY PACK WITH IMPROVED ENERGY DENSITY THROUGH IMPROVEMENT IN BONDING OF SENSING WIRE OF BUSBAR**
BATTERIEPACK MIT VERBESSERTER ENERGIEDICHTE DURCH VERBESSERUNG DER VERBINDUNG DES SENSORDRAHTS DER SAMMELSCHIENE
BLOC-BATTERIE À DENSITÉ ÉNERGÉTIQUE AMÉLIORÉE PAR AMÉLIORATION DE LA LIAISON D'UN FIL DE DÉTECTION DE BARRE OMNIBUS

(30) Priority: 27.09.2022 KR 20220122810
(43) Date of publication of application: 28.08.2024
(73) Proprietor: LG Energy Solution, Ltd., Seoul 07335 (KR)
(72) Inventor: YOO, Dong Won, Daejeon 34122 (KR); LEE, Young Kyu, Daejeon 34122 (KR); SON, Young Su, Daejeon 34122 (KR)
(74) Representative: Plasseraud IP
(86) International application number: PCT/KR2023/013968
(87) International publication number: WO 2024/071778

(56) References cited:
- WO-A1-2020/040460
- WO-A1-2021/125476
- CN-A- 114 597 517
- JP-A- 2013 187 046
- KR-A- 20180 100 811
- KR-A- 20190 080 717
- KR-A- 20220 041 429
- KR-A- 20220 057 251
- KR-B1- 102 321 513
- US-A1- 2021 273 283
- US-A1- 2022 173 484

## Description

### [Technical Field]

This application claims the benefit of priority to Korean Patent Application No. 2022-0122810 filed on September 27, 2022.

The present invention relates to a battery pack having energy density increased by improving a sensing wire bonding structure of a busbar, and more particularly to a battery pack configured such that an interconnected board (ICB) is integrally formed at a battery management system (BMS), wherein energy density of the battery pack is increased by improving sensing wire bonding of a busbar for a plurality of battery cells in the space of a battery pack coupled to the ICB-integrated BMS at the time of sensing wire bonding of the ICB connected to the busbar.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

As the types of devices using a lithium secondary battery as an energy source expand, the application of lithium secondary battery to devices that require high capacity and high power has also expanded.

In line with this trend, there has been an increase in the manufacture and use of a battery module, in which a plurality of battery cells are electrically connected to each other, and a battery pack, in which battery modules are connected to each other in series and/or in parallel.

Generally, in a secondary battery module, a slave type BMS configured to provide data on the voltage/temperature of individual cells is applied to a module side. For example, in a secondary battery pack for vehicles, a master type BMS is provided to a top tier, such as a PCS or a BMM, to collectively manage overall functions of the secondary battery pack.

Also, in a secondary battery module for energy storage systems (ESS), for series/parallel scalability between modules, a master type BMS is configured between individual modules to balance the individual modules, and data of each slave BMS is transmitted to the uppermost-level master BMS using a daisy chain.

Conventionally, since secondary battery modules variously exist and cartridges constituting the modules and busbars for sensing have different structures and positions, efficient connection is difficult, and the welding quality of a sensing structure is reduced. In addition, an unnecessary space in the secondary battery module must be prepared for welding, etc., which ultimately reduces the energy density of the secondary battery module.

Meanwhile, a busbar is widely used as a means for electrical connection between the battery modules, wherein the busbar is useful as a large current conduction means because the busbar is capable of allowing large current to stably flow therethrough while having a smaller thickness than a cable.

In general, the busbar may be configured in the form of a metal bar having good electrical conductivity, such as copper or aluminum, and the remaining part of the busbar excluding opposite ends, which are connected to terminals, is covered with a tube or an injection molded product for safety.

A sensing wire configured to sense information of the battery module through the busbar is connected to one end of the busbar. An interconnected board (ICB) is used to transmit the sensing information of the busbar to the BMS.

In general, the ICB is coupled to the BMS via a connector and status information of the battery cell is provided via the busbar.

In recent years, technological development of a secondary cell module used in an energy storage system or a power storage system has focused on configuring a battery pack as compact as possible in order to increase energy efficiency or density.

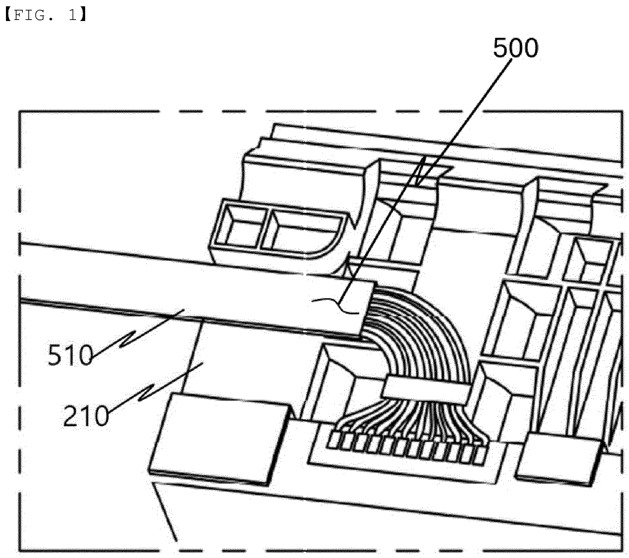

In this regard, FIG. 1 is a view showing connection between an ICB assembly, in which a conventional ICB is separately applied and is fastened to a BMS using a data connector, and a busbar.

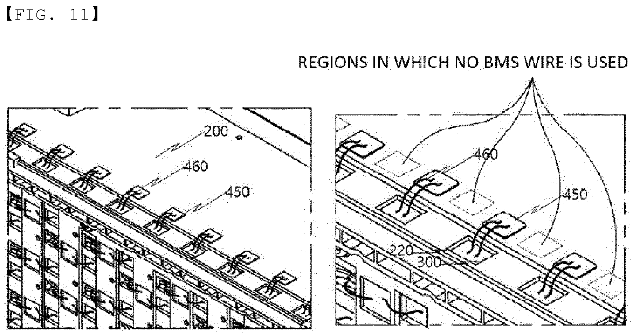

Referring to FIGs. 1 and 11, the BMS, which is a configuration separate from a battery pack having a battery cell received therein, is fastened via a data connector 510 of the ICB. In general, a busbar of the battery cell and the ICB are electrically connected to each other via a sensing wire. The ICB and the busbar are connected to each other by wire bonding between the busbar and a metal pad of the ICB configured to be connected to the busbar. The shape of the ICB assembly 500 connected to the busbar may be relatively freely configured since the shape of the ICB assembly is constrained by only the battery pack.

That is, a battery pack to which wire bonding is applied is generally configured such that a sensing line of each battery cell bank and the ICB are connected to each other by wire bonding and then the data connector of the ICB is fastened to the BMS. When the ICB board is separately applied, as described above, line wiring for sensing has a margin to some extent in board width selection. However, the energy density of the battery pack is substantially low due to the separate BMS configuration.

When the ICB is integrated into the BMS, therefore, coupling in the battery pack is achieved, whereby it is possible to manufacture a compact battery pack; however, there is a problem that the ICB and the busbar must be connected to each other within the size of the battery pack.

In this regard, Patent Document 1 discloses a battery pack including a plurality of battery cells, a rigid PCB extending across the plurality of battery cells so as to be electrically connected to each of the battery cells, the rigid PCB including a bus region configured to electrically connect the plurality of battery cells to each other and a BMS region configured to control charging and discharging operations of the battery cells.

Patent Document 1, which is technology relating to a battery pack manufactured through a simplified assembly process, is similar to the present invention in that the bus region and the BMS region are separately located in the same plane, but is different from the present invention in that a sensing wire of an ICB configured to connect a BMS and a busbar to each other is not disclosed and the busbar region tab and the BMS tab are not located on a straight line.

Patent Document 2 includes a cartridge assembly constituted by at least two cartridges, each of which is configured to receive a secondary battery cell, the cartridges being coupled to each other while being stacked, and a sensing housing, in which at least two busbars electrically connected to electrodes of the cells are disposed in a predetermined pattern, the sensing housing being integrally provided with a BMS circuit board configured to be connected to each busbar, the sensing housing being separably coupled to a side surface of the cartridge assembly, wherein the BMS circuit board has a plurality of receptacle terminals configured to be fitted onto the respective busbars in the form of a receptacle.

Patent Document 2, which is technology relating to a compact secondary battery module, is similar to the present invention in that a BMS circuit board configured to be connected to each busbar is integrally provided, the BMS circuit board and the busbar are electrically connected to each other in the form of a receptacle, and the position and structure of the receptacle terminals are disclosed, but is different from the present invention in that a sensing wire of an ICB configured to connect a BMS and a busbar to each other is not disclosed and the position of an electrode tab of the busbar is not disclosed.

Therefore, there is a need for technology of coupling between a busbar and ICB sensing capable of enabling battery control by a BMS and increasing energy density of a battery pack through coupling between an ICB integrally coupled to the BMS and the busbar.

### (Prior Art Documents)

(Patent Document 1) Korean Patent Application Publication No. 2020-0029918 (2020.03.19)
(Patent Document 2) Korean Registered Patent Publication No. 2115481 (2020.05.20)

Document WO2020040460 discloses a battery pack according to the preamble of claim 1.

### [Disclosure]

### [Technical Problem]

The present invention has been made in view of the above problems, and it is an object of the present invention to provide a battery pack configured such that an interconnected board (ICB) is integrally formed at a battery management system (BMS), wherein energy density of the battery pack is increased by improving sensing wire bonding of a busbar for a plurality of battery cells in the space of a battery pack coupled to the ICB-integrated BMS at the time of sensing wire bonding of the ICB connected to the busbar.

### [Technical Solution]

A battery pack according to the present invention to accomplish the above object includes a plurality of battery cells (100), a cell frame (200) accommodating the plurality of battery cells, a cell frame cover (210) coupled to a first surface of the cell frame, a battery management system (BMS) assembly (400) coupled to a second surface of the cell frame, a busbar support portion (220) formed at a first side surface of the cell frame cover, wherein the first side surface of the cell frame cover has an uneven form, and a metal pad support portion (440) formed at a first side surface of the BMS assembly, wherein the first side surface of the BMS assembly has an uneven form, wherein the busbar support portion and the metal pad support portion are coupled to each other by alternate fit coupling in the same plane.

In addition, a busbar (300) disposed on the busbar support portion and a metal pad (450) disposed on the metal pad support portion may be connected to each other via a sensing wire (460).

In addition, the busbar may be located at a busbar convex portion (221) of the busbar support portion, the metal pad may be located at a metal pad convex portion (441) of the metal pad support portion, the busbar may be coupled to a metal pad concave portion (442) of the metal pad support portion by fit coupling, and the metal pad may be coupled to a busbar concave portion (222) of the busbar support portion by fit coupling.

In addition, the BMS assembly may include an interconnected board (ICB) having a metal pad, wherein the interconnected board (ICB) is integrally formed with a BMS (420).

In addition, the busbar may be coupled to a terminal of the battery cell at a first surface of the cell frame cover.

In addition, an end of the busbar connected to a terminal of the battery cell may be disposed on the busbar support portion.

In addition, the battery pack may further include a BMS cover (410), wherein the BMS cover (410) covers the BMS assembly.

In addition, the BMS cover may be coupled to the BMS assembly, so that the busbar support portion and the metal pad support portion are exposed to the outside.

In addition, the sensing wire may be formed in one or more.

In addition, the plurality of battery cells may be at least one of a cylindrical battery cell, a prismatic battery cell, or a pouch-shaped battery cell.

In addition, a guide bar (211) configured to be coupled to the cell frame may be formed at each of opposite ends of the busbar support portion.

In addition, the length of a second side surface of the cell frame may be determined depending on the length of a second side surface of the BMS assembly.

In addition, the present invention may provide various combinations of the above solving means.

### [Advantageous Effects]

As is apparent from the above description, in a battery pack according to the present invention, a metal pad support portion of an ICB-integrated BMS assembly and a busbar support portion formed at a cell frame cover of the battery pack are coupled to each other by fit coupling, whereby the battery pack may be implemented so as to have a compact structure.

In another aspect of the present invention, an ICB is integrally formed at a BMS circuit board, whereby connection through a separate data connector may not be necessary and coupling between a busbar and a sensing portion may be easily achieved.

In addition, the BMS assembly may be integrally fixed to the battery pack, whereby the voltage of secondary battery cells may be stably sensed.

### [Description of Drawings]

FIG. 1 is a perspective view showing connection between an ICB assembly of a battery pack in which a BMS is fastened to a conventional separate ICB and a busbar.
FIG. 2 is a perspective view of a cell frame according to an embodiment of the present invention before a battery cell is received in the cell frame.
FIG. 3 is a perspective view of the cell frame according to the embodiment of the present invention after the battery cell is received in the cell frame.
FIG. 4 is a perspective view of a cell frame cover including a busbar and a busbar support portion according to an embodiment of the present invention.
FIG. 5 is a perspective view of a BMS assembly, in which an ICB and a BMS are integrally formed, according to an embodiment of the present invention.
FIG. 6 is a perspective view of a BMS cover configured to cover the BMS assembly according to the embodiment of the present invention and to be coupled to a battery pack.
FIG. 7 is a plan view and a sectional view showing a cell frame cover according to an embodiment of the present invention coupled to the cell frame, in which the battery cell is received, and a busbar in contact with the battery cell.
FIG. 8 is a plan view of an upper part of the cell frame according to the embodiment of the present invention showing the BMS assembly coupled to the BMS cover at the upper part of the cell frame.
FIG. 9 is a sectional view showing a sensing wire formed between a busbar of a busbar support portion of the cell frame cover according to the embodiment of the present invention and a metal pad of a metal pad support portion of the BMS assembly by welding.
FIG. 10 is a perspective view of a battery pack, in which a battery cell, a cell frame, a cell frame cover, a BMS assembly, and a BMS cover are coupled to each other, according to an embodiment of the present invention.
FIG. 11 is a perspective view showing connection between a conventional busbar and a metal pad via a sensing wire.

### [Best Model

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the accompanying drawings.

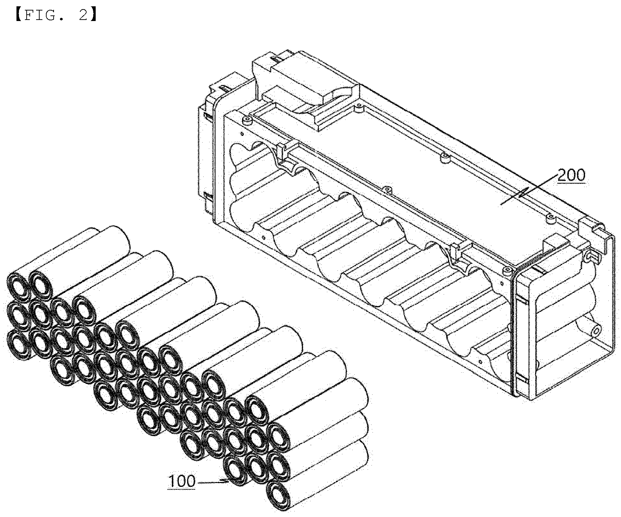

FIG. 2 is a perspective view of a cell frame according to an embodiment of the present invention before a battery cell is received in the cell frame.

A cell frame of a battery pack according to the present invention, in which a battery cell is received, is a cell frame designed based on the concept of a soft battery pack having no battery module. Consequently, a plurality of battery cells, preferably a plurality of cylindrical battery cells, is received in the cell frame in an upright state so as to overlap each other in parallel.

In addition, an ICB-integrated BMS may be formed at a side surface of a receiving portion of the cell frame, in which the battery cells are received. The side surface of the cell frame at which the ICB-integrated BMS is formed may be a first side surface.

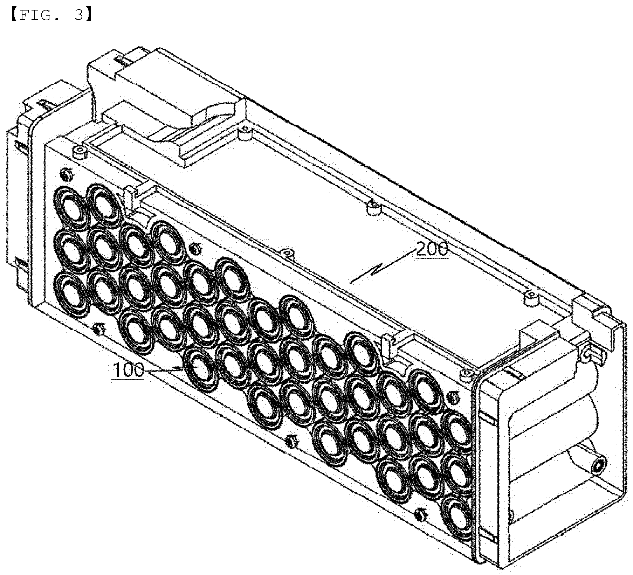

FIG. 3 is a perspective view of the cell frame according to the embodiment of the present invention after the battery cell is received in the cell frame.

A compact soft battery pack according to a preferred embodiment of the present invention may include a battery cell receiving portion configured to receive respective battery cells in the state in which the battery cells are stacked in parallel, a cell frame cover coupled to a side surface of the battery cell receiving portion, for example, by one-touch coupling, snap-fit coupling, hook coupling, or screw coupling, a plurality of busbars installed at the cell frame cover, and a side structure configured to be coupled to an ICB-integrated BMS assembly.

The cell frame cover and the BMS assembly may be formed on a contiguous side surface of the cell frame such that one side of the cell frame cover and one side of the BMS assembly are coupled to each other by fit coupling.

A BMS cover configured to protect the BMS assembly is provided at one side surface of the cell frame.

The cell frame may be formed by injection molding of plastic, and may have a receiving portion configured to receive battery cells. The battery cells may be stacked in the receiving portion.

The cell frames may be coupled to each other by snap-fit coupling or hook coupling. Each cell frame may be provided at a side surface with a plurality of frame hooks and a plurality of frame slots so as to be coupled to a neighboring cell frame. For example, a frame hook may protrude from a lower part of an edge of each frame, and a frame slot, into which a frame hook of a neighboring frame is inserted so as to be coupled thereto, may be provided at an upper part of the edge of the frame.

The cell frame may be provided at one end thereof with a member configured to covering the receiving portion configured to receive the battery cells. For example, a cell frame cover configured to be coupled by hook coupling, fit coupling, or screw coupling may be provided.

The cell frame cover may be formed by injection molding so as to have a shape similar to the shape of the cell frame.

The cell frame cover may be coupled to a cell frame slot to allow a busbar to be coupled to a terminal of the battery cell received in the cell frame located directly thereunder in a contact state.

A cell frame hook configured to be coupled to the cell frame slot may be provided. The cell frame cover may be coupled to the cell frame so as to cover the open receiving portion of the cell frame. The battery cell may be received in the receiving portion of the cell frame such that the terminal of the battery cell is located in a direction toward the opening of the cell frame.

The terminals of the battery cell may be brought into contact with the busbar formed at the cell frame cover as the result of coupling between the cell frame cover and the cell frame.

It will be sufficiently appreciated by those skilled in the art that the cell frame cover functions to protect the received battery cell and has the function and structure to finish and enclose the external shape of the soft battery pack.

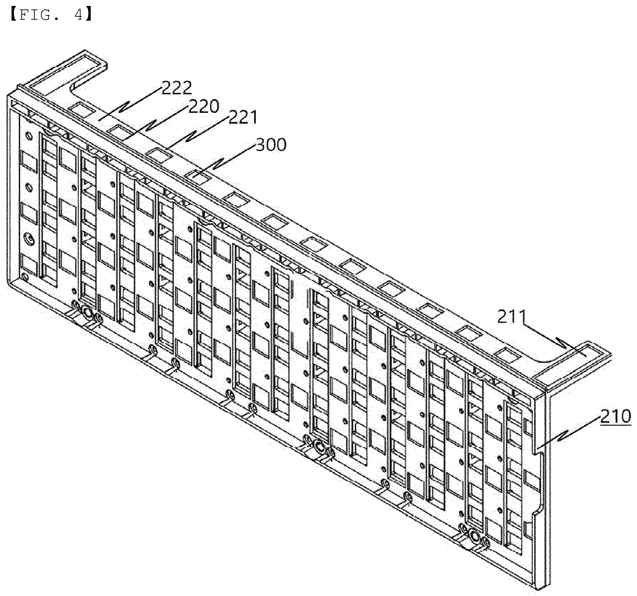

FIG. 4 is a perspective view of a cell frame cover including a busbar and a busbar support portion according to an embodiment of the present invention.

A soft battery pack according to one aspect of the present invention may include a battery cell receiving portion configured to receive a secondary battery cell, e.g., one or more battery cells coupled to each other in a stacked state and one or more busbars electrically connected to corresponding electrodes of the cells, wherein the busbars are disposed in a predetermined pattern, and a BMS circuit board configured to be connected to each busbar is integrally provided.

The terminal of the battery cell and the busbar are connected to the cell frame cover in contact, and at least one of ends of the busbar may be connected to an ICB sensing portion configure to transmit information of the battery cell to the BMS.

The cell frame cover may be separably coupled to one surface of the cell frame, and the ICB-integrated BMS circuit board, preferably a BMS assembly, may have a plurality of sensing terminals configured to be coupled to a busbar support portion on which the ends of the respective busbars are located and the metal pad support portion by fitting.

The soft battery pack according to the present invention may include a plurality of battery cells, a cell frame configured to receive the battery cells, a cell frame cover coupled to a first surface of the cell frame, a battery management system (BMS) assembly coupled to a second surface of the cell frame, a busbar support portion formed at a first side surface of the cell frame cover so as to have an uneven form, and a metal pad support portion formed at a first side surface of the BMS assembly so as to have an uneven form, wherein the busbar support portion and the metal pad support portion are coupled to each other by alternate fit coupling in the same plane.

The uneven form of the busbar support portion is not particularly restricted as long as the busbar support portion can be coupled to the metal pad support portion by fit coupling.

The uneven form may have at least one of a triangular shape, a quadrangular shape, a square shape, a rectangular shape, a rhombic shape, and a hemispherical shape, and the uneven form is not particularly restricted as long as a concave portion and a convex portion may be formed in the amorphous shape.

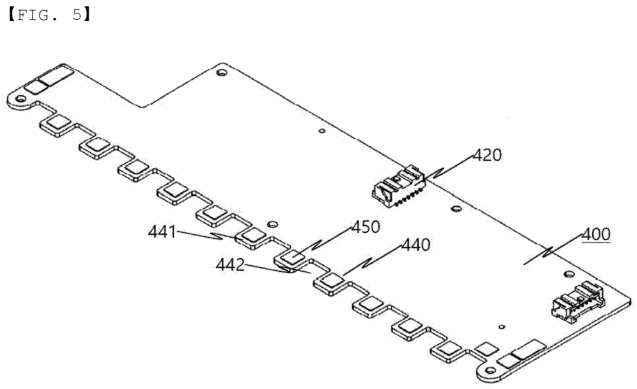

FIG. 5 is a perspective view of a BMS assembly, in which an ICB and a BMS are integrally formed, according to an embodiment of the present invention.

The metal pad support portion configured to support the metal pad may be formed in the rectangular uneven form. Preferably, the metal pad support portion is formed at the convex portion of the uneven form. More preferably, the metal pad support portion is formed at a metal pad convex portion.

The busbar support portion formed on the first side surface of the cell frame cover may be located at the concave portion of the uneven form so as to be coupled to the metal pad support portion by fit coupling. Preferably, the busbar support portion is located at a metal pad concave portion.

In the ICB-integrated BMS assembly, the BMS is formed at a predetermined position on the BMS assembly, whereby a separate data cable for transmission of data to a conventional ICB is not required. When the metal pad and the busbar are connected to each other via a sensing wire, therefore, physical data of the battery cell may be directly transmitted to the BMS via the busbar. The ICB-integrated BMS assembly may be configured in the form of a PCB.

In addition, the busbar located at the busbar support portion and the metal pad located at the metal pad support portion may be connected to each other via the sensing wire.

In addition, the busbar may be located at a busbar convex portion of the busbar support portion, the metal pad may be located at the metal pad convex portion of the metal pad support portion, the busbar may be coupled to the metal pad concave portion of the metal pad support portion by fit coupling, and the metal pad may be coupled to a busbar concave portion of the busbar support portion by fit coupling.

Also, in the BMS assembly, the interconnected board (ICB) including the metal pad and the BMS may be integrally formed.

In addition, the busbar may be coupled to the terminal of the battery cell at the first surface of the cell frame cover.

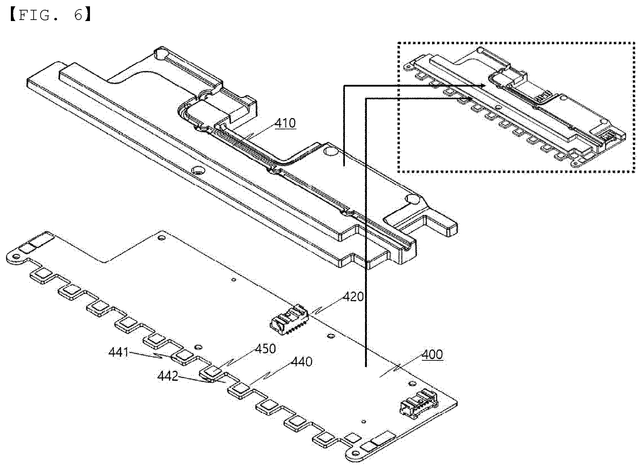

FIG. 6 is a perspective view of a BMS cover configured to cover the BMS assembly according to the embodiment of the present invention and to be coupled to a battery pack.

Busbars formed at the cell frame cover may be arranged at the cell frame cover in a plurality of rows such that connection portions thereof face an edge of a side surface of the BMS assembly circuit board, and receptacle terminals of the BMS assembly configured in the form of a metal pad may be electrically connected to the connection portions of the busbars by fit coupling.

At this time, the metal pad may be provided with a solder for sensing wire connection with the busbar. The width of the metal pad for sensing the battery cell may be equal to or less than the width of the busbar. The width of the metal pad may be changed as long as formation of the sensing wire with the busbar is easy.

The BMS assembly, preferably the ICB-integrated BMS circuit board, may be fixed by the BMS cover, as described above. The BMS assembly may be further fixed to the cell frame via a fixing hook formed at the BMS cover

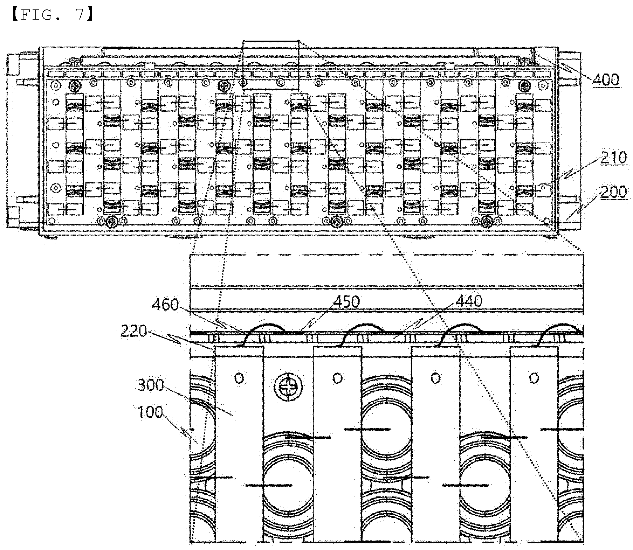

FIG. 7 is a plan view and a sectional view showing a cell frame cover according to an embodiment of the present invention coupled to the cell frame, in which the battery cell is received, and a busbar in contact with the battery cell.

In addition, the end of the busbar connected to the terminal of the battery cell may be located at the busbar support portion.

In addition, a BMS cover configured to cover the BMS assembly may be included.

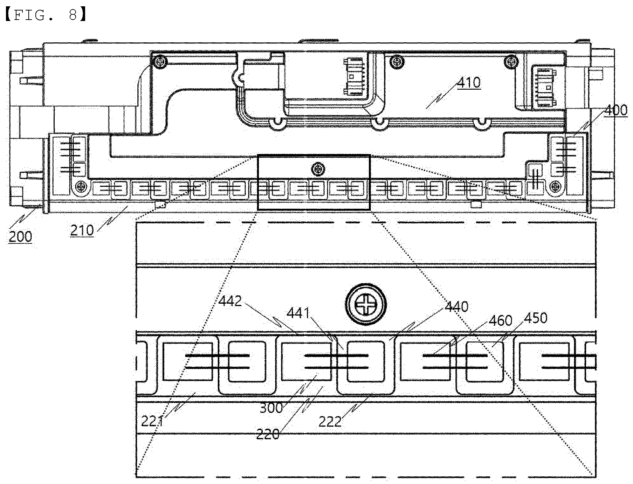

FIG. 8 is a plan view of an upper part of the cell frame according to the embodiment of the present invention showing the BMS assembly coupled to the BMS cover at the upper part of the cell frame.

In addition, the BMS cover may be coupled to the BMS assembly so as to expose the busbar support portion and the metal pad support portion to the outside.

In addition, one or more sensing wires may be formed.

At least one of the ends of the busbar may form a connection portion for sensing connection. The busbar has a simple bending structure in which one end of the busbar is bent or a hemming structure in which the bent portion is folded 180 degrees at least once to form an overlap shape. In the case of the hemming structure, the thickness of the connection portion is at least twice the thickness of the busbar.

When a relatively thin busbar is used, therefore, it may be preferable to manufacture the busbar such that the connection portion of the busbar has a hemmed structure. For example, the connection portion may be thickened, as described above, in order to prevent the occurrence of a gap between the connection portion and the metal pad when being coupled to each other by fit coupling.

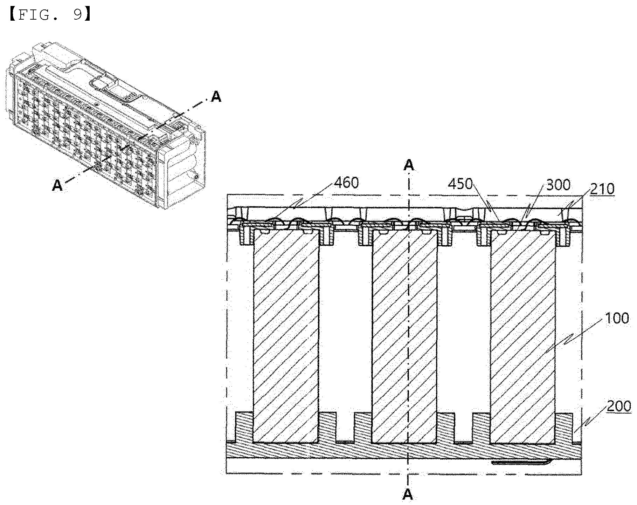

FIG. 9 is a sectional view showing a sensing wire formed between a busbar of a busbar support portion of the cell frame cover according to the embodiment of the present invention and a metal pad of a metal pad support portion of the BMS assembly by welding.

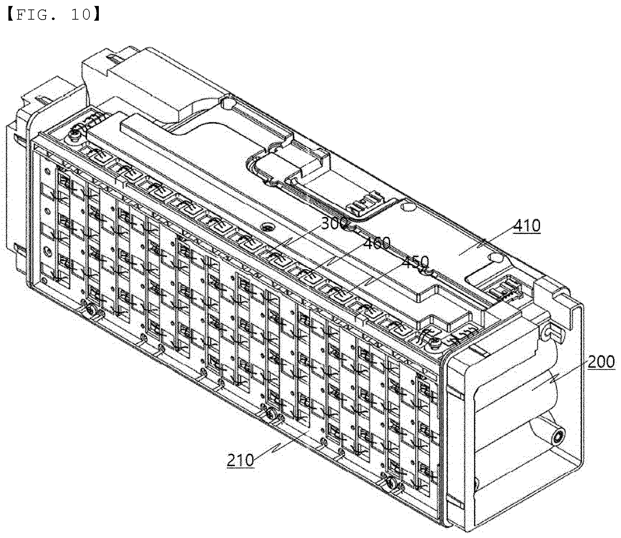

FIG. 10 is a perspective view of a battery pack, in which a battery cell, a cell frame, a cell frame cover, a BMS assembly, and a BMS cover are coupled to each other, according to an embodiment of the present invention.

In addition, the battery cell may be at least one of a cylindrical battery cell, a prismatic battery cell, and a pouch-shaped battery cell.

In addition, guide bars configured to be coupled to the cell frame may be formed at opposite ends of the busbar support portion.

In addition, the length of a second side surface of the cell frame may be determined depending on the length of a second side surface of the BMS assembly.

Preferably, the battery cell is a cylindrical battery cell. The battery cell is generally known, and therefore a more detailed description thereof will be omitted.

A positive electrode terminal and a negative electrode terminal of the battery cell may be formed in one direction, and the battery cell may be received in the receiving portion of the cell frame in an open direction thereof. Consequently, electrical contact with a plurality of busbars formed on the cell frame cover, which is coupled to the cell frame so as to cover the receiving portion of the cell frame, may be achieved.

The receiving portion of the cell frame may be formed such that the battery cell can be fixed in the receiving portion. A cushioning member, a cooling plate, etc. may be further added between the battery cells. The cell frame cover may be formed such that at least a part of the electrode terminal of the battery cell protrudes outward, and welding may be formed to electrically connect the negative electrode and the positive electrode of the battery cell to the busbar. The compact battery pack according to the present invention may be configured such that the plurality of battery cells is stacked side by side in a horizontal or vertical direction in order to increase capacity or power.

Those skilled in the art to which the present invention pertains will appreciate that various applications and modifications are possible within the category of the present invention based on the above description. The scope of protection is defined by the appended claims.

### (Description of Reference Numerals)

100: Battery cell
200: Cell frame
210: Cell frame cover
211: Guide bar
220: Busbar support portion
221: Busbar convex portion
222: Busbar concave portion
300: Busbar
400: BMS assembly
410: BMS cover
420: BMS
440: Metal pad support portion
441: Metal pad convex portion
442: Metal pad concave portion
450: Metal pad
460: Sensing wire
500: ICB assembly
510: ICB data connector

## Claims

1. A battery pack comprising:
a plurality of battery cells (100);
a cell frame (200) accommodating the plurality of battery cells (100);
a cell frame cover (210) coupled to a first surface of the cell frame (200);
a battery management system (BMS) assembly (400) coupled to a second surface of the cell frame (200);
a busbar support portion (220) formed at a first side surface of the cell frame cover (210), wherein the first side surface of the cell frame cover (210) has an uneven form; and
a metal pad support portion (440) formed at a first side surface of the BMS assembly (400), wherein the first side surface of the BMS assembly (400) has an uneven form,
**characterised in that** the busbar support portion (220) and the metal pad support portion (440) are coupled to each other by alternate fit coupling in the same plane.

2. The battery pack according to claim 1, wherein a busbar disposed on the busbar support portion (220) and a metal pad disposed on the metal pad support portion (440) are connected to each other via a sensing wire (460).

3. The battery pack according to claim 2, wherein the busbar is located at a busbar convex portion (221) of the busbar support portion (220),
wherein the metal pad is located at a metal pad convex portion (441) of the metal pad support portion (440),
wherein the busbar is coupled to a metal pad concave portion (442) of the metal pad support portion (440) by fit coupling, and
wherein the metal pad is coupled to a busbar concave portion (222) of the busbar support portion (220) by fit coupling.

4. The battery pack according to claim 1, wherein the BMS assembly (400) includes an interconnected board (ICB) having a metal pad (450), wherein the interconnected board (ICB) is integrally formed with a BMS.

5. The battery pack according to claim 1, wherein the busbar is coupled to a terminal of the battery cell (100) at a first surface of the cell frame cover (210).

6. The battery pack according to claim 1, wherein an end of the busbar connected to a terminal of the battery cell (100) is disposed on the busbar support portion (220).

7. The battery pack according to claim 1, further comprising a BMS cover (410), wherein the BMS cover (410) covers the BMS assembly (400).

8. The battery pack according to claim 7, wherein the BMS cover (410) is coupled to the BMS assembly (400), so that the busbar support portion (220) and the metal pad support portion (440) are exposed to an outside.

9. The battery pack according to claim 2, wherein the sensing wire (460) is formed in one or more.

10. The battery pack according to claim 1, wherein the plurality of battery cells (100) is at least one of a cylindrical battery cell, a prismatic battery cell, or a pouch-shaped battery cell.

11. The battery pack according to claim 1, wherein a guide bar (211) configured to be coupled to the cell frame (200) is formed at each of opposite ends of the busbar support portion (220).

12. The battery pack according to claim 1, wherein a length of a second side surface of the cell frame (200) is determined depending on a length of a second side surface of the BMS assembly (400).

## Patentansprüche

1. Batteriepack, umfassend:
eine Mehrzahl von Batteriezellen (100);
einen Zellenrahmen (200), welcher die Mehrzahl von Batteriezellen (100) aufnimmt;
eine Zellenrahmenabdeckung (210), welche mit einer ersten Fläche des Zellenrahmens (200) gekoppelt ist;
eine Batterieverwaltungssystem- (BMS) -Anordnung (400), welche mit einer zweiten Fläche des Zellenrahmens (200) gekoppelt ist;
einen Sammelschiene-Halterungsabschnitt (220), welcher an einer ersten Seitenfläche der Zellenrahmenabdeckung (210) gebildet ist, wobei die erste Seitenfläche der Zellenrahmenabdeckung (210) eine unebene Form aufweist; und
einen Metallplättchen-Halterungsabschnitt (440), welcher an einer ersten Seitenfläche der BMS-Anordnung (400) gebildet ist, wobei die erste Seitenfläche der BMS-Anordnung (400) eine unebene Form aufweist, **dadurch gekennzeichnet, dass** der Sammelschiene-Halterungsabschnitt (220) und der Metallplättchen-Halterungsabschnitt (440) durch eine alternierende Passungskopplung in der gleichen Ebene miteinander gekoppelt sind.

2. Batteriepack nach Anspruch 1, wobei eine Sammelschiene, welche an dem Sammelschiene-Halterungsabschnitt (220) angeordnet ist, und ein Metallplättchen, welches an dem Metallplättchen-Halterungsabschnitt (440) angeordnet ist, mittels eines Erfassungsdrahts (460) miteinander verbunden sind.

3. Batteriepack nach Anspruch 2, wobei die Sammelschiene an einem Sammelschiene-Konvexabschnitt (221) des Sammelschiene-Halterungsabschnitts (220) angeordnet ist,
wobei das Metallplättchen an einem Metallplättchen-Konvexabschnitt (441) des Metallplättchen-Halterungsabschnitts (440) angeordnet ist,
wobei die Sammelschiene durch eine Passungskopplung mit einem Metallplättchen-Konkavabschnitt (442) des Metallplättchen-Halterungsabschnitts (440) gekoppelt ist, und
wobei das Metallplättchen durch eine Passungskopplung mit einem Sammelschiene-Konkavabschnitt (222) des Sammelschiene-Halterungsabschnitts (220) gekoppelt ist.

4. Batteriepack nach Anspruch 1, wobei die BMS-Anordnung (400) eine zwischengeschaltete Platine (ICB) umfasst, welche ein Metallplättchen (450) aufweist, wobei die zwischengeschaltete Platine (ICB) mit einem BMS integral gebildet ist.

5. Batteriepack nach Anspruch 1, wobei die Sammelschiene mit einem Anschluss der Batteriezelle (100) an einer ersten Fläche der Zellenrahmenabdeckung (210) gekoppelt ist.

6. Batteriepack nach Anspruch 1, wobei ein Ende der Sammelschiene, welches mit einem Anschluss der Batteriezelle (100) verbunden ist, an dem Sammelschiene-Halterungsabschnitt (220) angeordnet ist.

7. Batteriepack nach Anspruch 1, ferner umfassend eine BMS-Abdeckung (410), wobei die BMS-Abdeckung (410) die BMS-Anordnung (400) abdeckt.

8. Batteriepack nach Anspruch 7, wobei die BMS-Abdeckung (410) mit der BMS-Anordnung (400) gekoppelt ist, sodass der Sammelschiene-Halterungsabschnitt (220) und der Metallplättchen-Halterungsabschnitt (440) zu einem Äußeren freigelegt sind.

9. Batteriepack nach Anspruch 2, wobei der Erfassungsdraht (460) als einer oder mehrere gebildet ist.

10. Batteriepack nach Anspruch 1, wobei die Mehrzahl von Batteriezellen (100) wenigstens eines aus einer zylindrischen Batteriezelle, einer prismatischen Batteriezelle oder einer beutelförmigen Batteriezelle ist.

11. Batteriepack nach Anspruch 1, wobei eine Führungsschiene (211), welche dazu eingerichtet ist, mit dem Zellenrahmen (200) gekoppelt zu sein, an jedem von entgegengesetzten Enden des Sammelschiene-Halterungsabschnitts (220) gebildet ist.

12. Batteriepack nach Anspruch 1, wobei eine Länge einer zweiten Seitenfläche des Zellenrahmens (200) in Abhängigkeit einer Länge einer zweiten Seitenfläche der BMS-Anordnung (400) bestimmt ist.

## Revendications

1. Bloc-batterie comprenant :
une pluralité de cellules de batterie (100) ;
un cadre de cellules (200) hébergeant la pluralité de cellules de batterie (100) ;
un couvercle de cadre de cellules (210) couplé à une première surface du cadre de cellules (200) ;
un ensemble de système de gestion de batterie (BMS) (400) couplé à une seconde surface du cadre de cellules (200) ;
une partie de support de barre omnibus (220) formée au niveau d'une première surface latérale du couvercle de cadre de cellules (210), dans lequel la première surface latérale du couvercle de cadre de cellules (210) présente une forme irrégulière ; et
une partie de support de patin métallique (440) formée au niveau d'une première surface latérale de l'ensemble BMS (400), dans lequel la première surface latérale de l'ensemble BMS (400) présente une forme irrégulière, **caractérisé en ce que** la partie de support de barre omnibus (220) et la partie de support de patin métallique (440) sont couplées l'une à l'autre par un couplage à ajustement alternatif dans le même plan.

2. Bloc-batterie selon la revendication 1, dans lequel une barre omnibus disposée sur la partie de support de barre omnibus (220) et un patin métallique disposé sur la partie de support de patin métallique (440) sont reliés l'un à l'autre via un fil de détection (460).

3. Bloc-batterie selon la revendication 2, dans lequel la barre omnibus est située au niveau d'une partie convexe de barre omnibus (221) de la partie de support de barre omnibus (220),
dans lequel le patin métallique est situé au niveau d'une partie convexe de patin métallique (441) de la partie de support de patin métallique (440),
dans lequel la barre omnibus est couplée à une partie concave de patin métallique (442) de la partie de support de patin métallique (440) par couplage à ajustement, et dans lequel le patin métallique est couplé à une partie concave de barre omnibus (222) de la partie de support de barre omnibus (220) par couplage à ajustement.

4. Bloc-batterie selon la revendication 1, dans lequel l'ensemble BMS (400) comporte une carte interconnectée (ICB) ayant un patin métallique (450), dans lequel la carte interccnnectée (ICB) est formée d'un seul tenant avec un BMS.

5. Bloc-batterie selon la revendication 1, dans lequel la barre omnibus est couplée à une borne de la cellule de batterie (100) au niveau d'une première surface du couvercle de cadre de cellules (210).

6. Bloc-batterie selon la revendication 1, dans lequel une extrémité de la barre omnibus connectée à une borne de la cellule de batterie (100) est disposée sur la partie de support de barre omnibus (220).

7. Bloc-batterie selon la revendication 1, comprenant en outre un couvercle de BMS (410), dans lequel le couvercle de BMS (410) recouvre l'ensemble BMS (400).

8. Bloc-batterie selon la revendication 7, dans lequel le couvercle de BMS (410) est couplé à l'ensemble BMS (400), de sorte que la partie de support de barre omnibus (220) et la partie de support de patin métallique (440) sont exposées à un extérieur.

9. Bloc-batterie selon la revendication 2, dans lequel le fil de détection (460) est formé en un seul ou plusieurs.

10. Bloc-batterie selon la revendication 1, dans lequel la pluralité de cellules de batterie (100) est au moins une parmi une cellule de batterie cylindrique, une cellule de batterie prismatique ou une cellule de batterie en forme de poche.

11. Bloc-batterie selon la revendication 1, dans lequel une barre de guidage (211) configurée pour être couplée au cadre de cellules (200) est formée à chacune des extrémités opposées de la partie de support de barre omnibus (220).

12. Bloc-batterie selon la revendication 1, dans lequel une longueur d'une seconde surface latérale du cadre de cellules (200) est déterminée en fonction d'une longueur d'une seconde surface latérale de l'ensemble BMS (400).
